# EUROPÄISCHE PATENTANMELDUNG

(11) **EP 3 193 026 A1**
(43) Veröffentlichungstag der Anmeldung: **19.07.2017**
(21) Anmeldenummer: 17150995.3
(22) Anmeldetag: 11.01.2017
(51) Int. Cl.: F16B 5/02, B01D 46/00, F16B 5/06

(54) **MEHRTEILIGES GEHÄUSE AUS KUNSTSTOFF**

(30) Priorität: 18.01.2016 DE 102016200568
(71) Anmelder: Mahle International GmbH, 70376 Stuttgart (DE)
(72) Erfinder: VOIGT, Klaus, 74321 Bietigheim-Bissingen (DE)
(74) Vertreter: BRP Renaud & Partner mbB Rechtsanwälte Patentanwälte Steuerberater

(57) **Zusammenfassung**

Die vorliegende Erfindung betrifft ein mehrteiliges Kunststoffgehäuse (1) mit einem ersten Gehäuseteil (2) aus Kunststoff und einem zweiten Gehäuseteil (3) aus Kunststoff, die mit wenigstens einer Befestigungseinrichtung (5) lösbar aneinander befestigbar sind, wobei die jeweilige Befestigungseinrichtung (5) eine am ersten Gehäuseteil (2) integral ausgeformte erste Konsole (6) und eine am zweiten Gehäuseteil (3) integral ausgeformte zweite Konsole (7) aufweist.

Ein erhöhter Gebrauchswert ergibt sich, wenn die erste Konsole (6) einen Schraubdom (8) zum Einschrauben einer Schraube (9) und einen Klammereingriff (12) aufweist, an dem eine Klammer (13) eines Klammerverschlusses (14) eingreifen kann, und wenn die zweite Konsole (7) ein Schraubenwiderlager (16), an dem sich ein Kopf (17) der in den Schraubdom (8) eingeschraubten Schraube (9) axial abstützen kann, und ein Hebellager (18) aufweist, in dem sich ein Hebel (19) des Klammerverschlusses (14) abstützen kann, an dem die Klammer (13) schwenkbar gelagert ist.

## Beschreibung

Die vorliegende Erfindung betrifft ein mehrteiliges Kunststoffgehäuse, vorzugsweise für eine Verwendung in einem Fahrzeug.

Üblicherweise umschließt ein Gehäuse einen Gehäuseinnenraum, um darin untergebrachte Komponenten zu schützen. Ein solches Gehäuse kann mehrteilig ausgestaltet sein, so dass zumindest ein erstes Gehäuseteil und ein zweites Gehäuseteil vorliegen, die aneinander befestigt werden können. Durch die Mehrteiligkeit des Gehäuses ist der Gehäuseinnenraum zugänglich, solange die Gehäuseteile nicht aneinander befestigt sind. Dies kann zur Unterbringung der Komponenten im Gehäuse genutzt werden. Falls diese Komponenten wartungsfrei sind, können die Gehäuseteile dauerhaft und unlösbar aneinander befestigt werden. Besteht jedoch die Gefahr, dass eine solche Komponente ersetzt werden muss, ist es zweckmäßig, die Gehäuseteile lösbar aneinander zu befestigen. Hierzu existieren geeignete Befestigungseinrichtungen, mit deren Hilfe eine lösbare Befestigung der beiden Gehäuseteile aneinander realisierbar ist. Rein exemplarisch seien hier Schraubverbindungen und Klammerverbindungen genannt. Schraubverbindungen zeichnen sich durch eine preiswerte Realisierbarkeit aus, so dass sie sich insbesondere für eine Serienfertigung eignen. Für eine preiswerte Herstellung kann für die jeweilige Schraube am betreffenden Gehäuseteil aus Kunststoff ein geeigneter Schraubdom ausgeformt werden, in den die jeweilige Schraube eingeschraubt werden kann. Ein derartiger Schraubdom eignet sich jedoch nur für Schraubverbindungen, die relativ selten geöffnet werden müssen, da der Schraubdom aus Kunststoff bei jedem Schraubvorgang einem hohen Verschleiß ausgesetzt ist. Somit eignet sich eine Schraubverbindung bei Kunststoffgehäusen nur dann, wenn das Kunststoffgehäuse nicht oder nur sehr selten geöffnet werden muss. Im Unterschied dazu können Klammerverbindungen quasi beliebig häufig gelöst und wieder neu verschlossen werden. Allerdings sind Klammerverbindungen deutlich höher in den Herstellungskosten. Dementsprechend sind Klammerverbindungen für Kunststoffgehäuse, die nur selten mehrfach geöffnet werden müssen, eher ungeeignet, um diese in großer Stückzahl herzustellen.

Die vorliegende Erfindung beschäftigt sich mit dem Problem, für ein Kunststoffgehäuse der vorstehend beschriebenen Art eine vereinfachte oder zumindest eine andere Ausführungsform anzugeben, die sich durch eine preiswerte Herstellbarkeit und durch einen verbesserten Gebrauchswert auszeichnet. Insbesondere soll ein Weg für eine preiswerte Fertigung aufgezeigt werden, wenn das Kunststoffgehäuse nur in relativ seltenen Anwendungsfällen mehrfach geöffnet werden muss, während es in der überwiegenden Mehrheit der Anwendungsfälle nicht oder nur sehr selten geöffnet werden muss.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, für die Realisierung einer Befestigungseinrichtung am ersten Gehäuseteil eine erste Konsole und am zweiten Gehäuseteil eine zweite Konsole jeweils integral auszuformen. Ferner sind die erste Konsole und die zweite Konsole sowohl für die Realisierung einer Schraubverbindung als auch für die Realisierung einer Klammerverbindung ausgestaltet, so dass die beiden Gehäuseteile über die jeweilige Befestigungseinrichtung wahlweise mit einer Schraubverbindung oder mit einer Klammerverbindung aneinander lösbar befestigt werden können. Grundsätzlich ist auch denkbar, die Konsolen so aufeinander abzustimmen, dass sogar gleichzeitig eine Schraubverbindung und eine Klammerverbindung realisierbar sind. Da die Gehäuseteile und somit die integral daran ausgeformten Konsolen aus Kunststoff bestehen, lassen sich die Gehäuseteile mit integrierten Konsolen preiswert mittels Spritzformtechnik herstellen. Somit eignet sich das hier vorgestellte Gehäuse in besonderer Weise für eine Serienfertigung. Sofern nun für einen ersten Anwendungsfall oder Standardfall nur ein seltenes Öffnen des Gehäuses erforderlich ist, beispielsweise um bei einem Ausfall einer im Gehäuse untergebrachten Komponente einen Austausch der Komponente durchführen zu können, kann das Gehäuse mit zumindest einer Schraubverbindung versehen werden, um die Gehäuseteile aneinander lösbar zu befestigen. Somit lässt sich dieser Standardfall in großer Stückzahl preiswert realisieren. Soll dagegen das Gehäuse für einen zweiten Anwendungsfall oder Ausnahmefall so konfiguriert werden, dass es häufig, insbesondere beliebig oft, geöffnet und wieder verschlossen werden kann, beispielsweise um regelmäßige Wartungsarbeiten für die darin untergebrachten Komponenten durchführen zu können, kann das Gehäuse mit zumindest einem Klammerverschluss ausgestattet werden. Da die Konsolen sowohl für die Realisierung einer solchen Schraubverbindung als auch einer derartigen Klammerverbindung vorbereitet sind, lässt sich auch diese Variante für den Ausnahmefall vergleichsweise preiswert realisieren. Des Weiteren kann sogar vorgesehen sein, dass die Klammerverbindung nachrüstbar ist, so dass jeder Standardfall in einen Ausnahmefall nach- bzw. umgerüstet werden kann. In diesem Fall wird zum ersten Öffnen des Gehäuses die jeweilige Schraubverbindung gelöst, während zum nachfolgenden Verschließen dann der Klammerverschluss angebracht wird. Für jeden weiteren Öffnungs- und Schließvorgang steht dann der Klammerverschluss zur Verfügung. Ebenso ist zur Vereinfachung der Serienfertigung denkbar, zunächst sämtliche Gehäuse mit der Schraubverbindung auszustatten, um dann für die Ausnahmefälle zusätzlich eine Klammerverbindung vorzusehen. Beim ersten Öffnen des Gehäuses muss dann zusätzlich zur Klammerverbindung auch die Schraubverbindung gelöst werden. Beim erneuten Schließen des Gehäuses kann jedoch die Schraubverbindung bereits weggelassen werden, so dass bei jeder folgenden Öffnung des Gehäuses nur noch die Klammerverbindung gelöst werden muss.

Im Einzelnen schlägt die Erfindung vor, dass die erste Konsole einen Schraubdom zum Einschrauben einer Schraube und einen Klammereingriff aufweist, an dem eine Klammer eines Klammerverschlusses eingreifen kann. Im Unterschied dazu weist die zweite Konsole ein Schraubenwiderlager, an dem sich ein Kopf der in den Schraubdom eingeschraubten Schraube axial abstützen kann, und ein Hebellager auf, in dem sich ein Hebel des Klammerverschlusses schwenkbar abstützen kann, wobei an diesem Hebel die Klammer schwenkbar gelagert ist. Gleichwirkend und äquivalent dazu ist dabei auch eine Variante, bei der die erste Konsole den Schraubdom und das Hebellager aufweist, während die zweite Konsole das Schraubenwiderlager und den Klammereingriff aufweist. Diese Variante lässt sich analog auch mit den nachfolgend beschriebenen Ausführungsformen realisieren.

Gemäß einer vorteilhaften Ausführungsform kann das Schraubenwiderlager eine Durchgangsöffnung für einen Schaft der Schraube aufweisen, die zu einer Schrauböffnung des Schraubdoms fluchtet, wenn das erste Gehäuseteil am zweiten Gehäuseteil befestigt ist. Somit lässt sich eine besonders effiziente Schraubverbindung realisieren.

Bevorzugt ist vorgesehen, dass das Hebellager an der zweiten Konsole an einer von der ersten Konsole abgewandten Seite angeordnet ist. Zusätzlich oder alternativ kann das Hebellager nach außen konkav gekrümmt sein und eine Hebelschwenkachse definieren, um die der Hebel im Hebellager schwenkbar gelagert ist, wenn der Klammerverschluss am Gehäuse angebracht ist, insbesondere unabhängig davon, ob der Klammerverschluss zum Befestigen der beiden Gehäuseteile aneinander verwendet wird oder nicht. Somit definiert das Hebellager ein Drehlager, in dem der Hebel um besagte Schwenkachse drehbar bzw. schwenkbar ist.

Zweckmäßig kann das Schraubenwiderlager im Hebellager angeordnet sein. Hierdurch baut die zweite Konsole extrem kompakt und benötigt wenig Bauraum am zweiten Gehäuseteil. Besonders vorteilhaft ist eine Weiterbildung, bei welcher das Schraubenwiderlager im Hebellager versenkt angeordnet ist. Durch die versenkte Anordnung des Schraubenwiderlagers ist es insbesondere möglich, an derselben Befestigungseinrichtung sowohl die Schraubverbindung als auch die Klammerverbindung zu realisieren, da der im Schraubenwiderlager versenkte Schraubenkopf die Verschwenkbarkeit des Hebels im Hebellager nicht behindert.

Bei einer anderen Ausführungsform kann ein in das Hebellager eingesetztes Lagerende des Hebels das Schraubenwiderlager abdecken. Dies hat zur Folge, dass der Schraubenkopf bei in das Hebellager eingesetztem Hebel nicht mehr zugänglich ist. Sofern sowohl eine Schraubverbindung als auch ein Klammerverschluss vorgesehen sind, bewirkt der Klammerverschluss dadurch eine Sicherung der Schraubverbindung. Vordergründig ist jedoch der Vorteil, dass durch diese Bauweise die zweite Konsole extrem kompakt realisiert werden kann, so dass die zweite Konsole wenig Bauraum am zweiten Gehäuseteil benötigt.

Vorteilhaft kann vorgesehen sein, dass der Klammereingriff in der ersten Konsole an einer von der zweiten Konsole abgewandten Seite eine Vertiefung definiert, in welche die Klammer formschlüssig eingreifen kann, wenn der Klammerverschluss am Gehäuse angebracht und zum Befestigen der beiden Gehäuseteile aneinander verwendet wird.

Bei einer anderen Ausführungsform kann ein in den Klammereingriff eingreifendes Bügelende der Klammer den Schraubdom übergreifen. Insbesondere kann dabei der Schraubdom zumindest einen Teil des Klammereingriffs bilden und zur formschlüssigen Sicherung des Bügelendes genutzt werden. Auch diese Maßnahme führt zu einer kompakten Bauform der ersten Konsole, so dass auch die erste Konsole am ersten Gehäuseteil nur wenig Bauraum benötigt.

Vorteilhaft ist eine Ausführungsform, bei welcher der Schraubdom bezüglich einer Hebelschwenkachse, um die der Hebel im Hebellager schwenkbar gelagert ist, mittig zum Klammereingriff angeordnet ist. Hierdurch ergibt sich ein extrem kompakter Aufbau für die erste Konsole.

Zusätzlich oder alternativ kann das Schraubenwiderlager bezüglich einer Hebelschwenkachse, um die der Hebel im Hebellager schwenkbar gelagert ist, mittig zum Hebellager angeordnet sein. Hierdurch wird für die zweite Konsole eine extrem kompakte Bauform realisiert.

Gemäß einer anderen vorteilhaften Ausführungsform kann die zweite Konsole eine Rasteinrichtung aufweisen, die den Hebel an der zweiten Konsole sichert und die beim Einsetzen eines Lagerendes des Hebels in das Hebellager einrastet. Durch das Anbringen des Hebels an der zweiten Konsole, also beim Einführen des Lagerendes in das Hebellager bewirkt die Rasteinrichtung eine Verrastung bzw. ein Einrasten des Lagerendes im Hebellager. In der Folge kann der Hebel anschließend nicht mehr oder nur noch mit deutlich erhöhter Kraft quer zur Hebelschwenkachse aus dem Hebellager herausgezogen werden. Somit ist der Hebel und somit der gesamte Klammerverschluss verliersicher an der zweiten Konsole gehalten. Somit lässt sich der Klammerverschluss am Gehäuse verliersicher anbringen unabhängig davon, ob er zum Befestigen der beiden Gehäuseteile aneinander verwendet wird oder nicht. Insbesondere kann er auf diese Weise quasi redundant am Gehäuse zur Verfügung gestellt werden, solange die Befestigung der beiden Gehäuseteile aneinander mit der jeweiligen Schraube erfolgt. Er kann dann zusätzlich zur Schraube oder alternativ zur Schraube zum Befestigen der beiden Gehäuseteile aneinander zum Einsatz kommen, falls die Schraube verlorengeht oder das Gewinde im Schraubdom unbrauchbar geworden ist.

Bei einer anderen vorteilhaften Ausführungsform kann die erste Konsole einen der zweiten Konsole zugewandten, vorzugsweise flächigen, ersten Anschlag aufweisen. Zusätzlich oder alternativ dazu kann die zweite Konsole einen der ersten Konsole zugewandten, insbesondere flächigen, zweiten Anschlag aufweisen. Zweckmäßig kann nun vorgesehen sein, dass bei am ersten Gehäuseteil befestigtem zweitem Gehäuseteil der erste Anschlag am zweiten Anschlag abgestützt ist, wobei sich insbesondere eine flächige Anlage der beiden Anschläge aneinander ergibt. Durch diesen unmittelbaren Kontakt der beiden Konsolen aneinander lassen sich vergleichsweise hohe Kräfte zwischen den Konsolen innerhalb der jeweiligen Befestigungseinrichtung übertragen, um eine effiziente Befestigung der beiden Gehäuseteile aneinander zu gewährleisten.

Bei einer vorteilhaften Weiterbildung können der erste Anschlag und der zweite Anschlag in einer Trennebene liegen, in der das erste Gehäuseteil und das zweite Gehäuseteil aneinander anliegen. Diese Bauform erleichtert die Montage.

Bei einer anderen Ausführungsform, die insbesondere davon ausgeht, dass die Befestigungseinrichtung mit dem Klammerverschluss ausgestattet ist, kann der Hebel ein manuell betätigbares Griffende und ein im Hebellager um eine Hebelschwenkachse schwenkbar gelagertes Lagerende aufweisen, wobei die Klammer zwischen dem Lagerende und dem Griffende um eine Klammerschwenkachse schwenkbar gelagert ist, die sich parallel zur Hebelschwenkachse erstreckt. Somit besteht der Klammerverschluss vorzugsweise nur aus zwei Bauteilen, nämlich aus dem Hebel und der daran gelagerten Klammer. Somit zeichnet sich die hier realisierbare Klammerverbindung durch einen besonders einfachen und somit preiswert realisierbaren Aufbau aus. Bemerkenswert ist, dass die Klammerverbindung durch den Klammereingriff, das Hebellager und den Klammerverschluss gebildet ist, wobei der Klammerverschluss hierzu den Hebel und die Klammer aufweist. Die Schraubverbindung wird durch den Schraubdom, das Schraubenwiderlager und die Schraube gebildet.

Bei einer anderen Ausführungsform, die insbesondere davon ausgeht, dass die Befestigungseinrichtung mit dem Klammerverschluss ausgestattet ist, kann der Klammerverschluss durch Verschwenken des Hebels um eine Hebelschwenkachse im Hebellager zwischen einer Schließstellung und einer Offenstellung verstellbar sein, wobei die einzelnen Komponenten der Klammerverbindung so aufeinander abgestimmt sind, dass der Klammerverschluss in der Schließstellung eine Übertotpunktlage einnimmt. Hierdurch ist der Klammerverschluss gegen ein selbsttätiges Öffnen gesichert. Die Übertotpunktlage charakterisiert sich dadurch, dass sich eine Ebene, in der eine Klammerschwenkachse und eine Bügelachse liegen, zwischen einer Hebelschwenkachse und einem Gehäuseinnenraum erstreckt. Die Klammerschwenkachse ist dabei durch die Achse gebildet, um welche die Klammer schwenkbar am Hebel gelagert ist. Die Bügelachse ist dabei durch diejenige Achse gebildet, in der sich ein in den Klammereingriff eingreifendes Bügelende der Klammer erstreckt. Die Hebelschwenkachse ist durch diejenige Achse gebildet, um die der in das Hebellager eingesetzte Hebel schwenkbar gelagert ist. Der Gehäuseinnenraum ist derjenige Raum, der vom Gehäuse im Bereich der Konsolen umschlossen ist. Mit anderen Worten, in der Übertotpunktlage befindet sich die Hebelschwenkachse an einer vom Gehäuseinneren abgewandten Seite der genannten Ebene. Beim Verschwenken des Hebels wird die Klammerschwenkachse um die Hebelschwenkachse verschwenkt. Gleichzeitig schwenkt dadurch die vorstehend genannte Ebene um die Bügelachse. In der Folge durchquert die Hebelschwenkachse die besagte Ebene und liegt anschließend in der Offenstellung des Klammerverschlusses auf der dem Gehäuseinnenraum zugewandten Seite der genannten Ebene. Diese Kinematik hat zur Folge, dass zum Überführen des Klammerverschlusses von der Schließstellung in die Offenstellung die Klammer federelastisch gedehnt werden muss, so dass eine Schließkraft der Klammer überwunden werden muss, mit der die Klammer den Hebel in die Schließstellung vorspannt.

Bei einer anderen vorteilhaften Ausführungsform kann das erste Gehäuseteil einen Öffnungsrand aufweisen, der eine Gehäuseöffnung einfasst, die bei am ersten Gehäuseteil befestigtem zweitem Gehäuseteil durch das zweite Gehäuseteil verschlossen ist. Zweckmäßig kann nun das erste Gehäuseteil in diesem Öffnungsrand eine Nut aufweisen, in die eine dazu komplementäre, am zweiten Gehäuseteil integral ausgeformte Feder eingreift, wenn das zweite Gehäuseteil am ersten Gehäuseteil befestigt ist. Hierdurch ergibt sich eine vorbestimmte Lagepositionierung zwischen beiden Gehäuseteilen, wenn diese aneinander angebracht werden, um das Befestigen der beiden Gehäuseteile aneinander mit Hilfe der jeweiligen Befestigungseinrichtung zu vereinfachen. Gleichzeitig bewirkt eine solche Nut-Feder-Verbindung eine gewisse Abdichtung des Gehäuses, also eine Abdichtung des Gehäuseinnenraums gegenüber einer Gehäuseumgebung. Es ist klar, dass grundsätzlich bei einer alternativen Ausführungsform das zweite Gehäuseteil einen Öffnungsrand mit einer Nut aufweisen kann, während dann das erste Gehäuseteil die darin eingreifende, komplementäre Feder aufweist.

Gemäß einer anderen vorteilhaften Ausführungsform kann vorgesehen sein, dass bei am ersten Gehäuseteil befestigtem zweitem Gehäuseteil in der jeweiligen Befestigungseinrichtung die Schraube in den Schraubdom der ersten Konsole eingeschraubt und mit ihrem Kopf am Schraubwiderlager der zweiten Konsole abgestützt ist. Zusätzlich oder alternativ kann bei am ersten Gehäuseteil befestigtem zweitem Gehäuseteil der Klammerverschluss in seine Schließstellung verstellt sein, in der die Klammer in den Klammereingriff der ersten Konsole eingreift und der Hebel am Hebellager der zweiten Konsole abgestützt ist. Mit anderen Worten, wenn die Befestigungseinrichtung zum Befestigen der beiden Gehäuseteile aneinander aktiv ist, kommt entweder die Schraubverbindung oder die Klammerverbindung zum Einsatz. Ebenso kann vorgesehen sein, dass sowohl die Schraubverbindung als auch die Klammerverbindung zum Einsatz kommen. Dementsprechend ist die jeweilige Befestigungseinrichtung mit der Schraube und/oder mit dem Klammerschluss ausgestattet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine auseinander gezogene, isometrische Ansicht eines Kunststoffgehäuses mit mehreren Befestigungseinrichtungen,
- Fig. 2: eine isometrische Ansicht des Kunststoffgehäuses im Bereich einer Befestigungseinrichtung mit einer Klammerverbindung,
- Fig. 3: eine isometrische Ansicht der Befestigungseinrichtung mit einer Schraubverbindung,
- Fig. 4: eine isometrische Ansicht eines Klammerverschlusses der Klammerverbindung,
- Fig. 5: eine stark vereinfachte Prinzipdarstellung des Klammerverschlusses zur Veranschaulichung einer Schließstellung A und einer Offenstellung B.

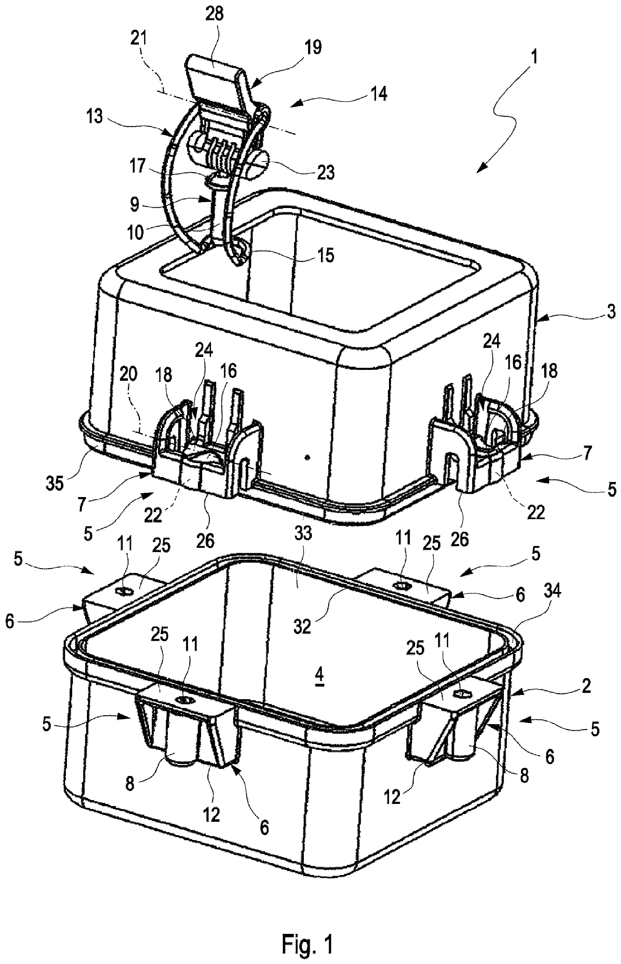

Entsprechend Fig. 1 umfasst ein mehrteiliges Kunststoffgehäuse 1 ein erstes Gehäuseteil 2 und ein zweites Gehäuseteil 3. Erstes Gehäuseteil 2 und zweites Gehäuseteil 3 sind jeweils aus Kunststoff hergestellt, beispielsweise mittels Spritzgusstechnik. Im gezeigten Beispiel besteht das Kunststoffgehäuse 1 aus diesen beiden Gehäuseteilen 2, 3. Das Gehäuse 1 umschließt einen Gehäuseinnenraum 4, in dem sich zumindest eine, quasi beliebige Komponente unterbringen lässt. Durch Befestigen der beiden Gehäuseteile 2, 3 aneinander wird der Gehäuseinnenraum 4 verschlossen. In der Regel ist er dadurch von außen nicht mehr zugänglich. Erst wenn das Gehäuse 1 geöffnet wird, ist der Gehäuseinnenraum 4 wieder zugänglich. Das Öffnen des Gehäuses 1 erfolgt dadurch, dass das zweite Gehäuseteil 3 vom ersten Gehäuseteil 2 entfernt wird und/oder umgekehrt.

Das Gehäuse 1 weist außerdem zumindest eine Befestigungseinrichtung 5 auf, mit deren Hilfe die beiden Gehäuseteile 2, 3 lösbar aneinander befestigt werden können. Im Beispiel der Fig. 1 sind genau vier derartige Befestigungseinrichtungen 5 vorgesehen, die auf vier Seiten des insgesamt quaderförmigen Gehäuses 1 verteilt angeordnet sind.

Die jeweilige Befestigungseinrichtung 5 weist entsprechend den Fig. 1 bis 3 jeweils eine erste Konsole 6 und eine zweite Konsole 7 auf. Die erste Konsole 6 ist integral am ersten Gehäuseteil 2 ausgeformt, wird also bereits beim Spritzgießen des ersten Gehäuseteils 2 daran ausgebildet. Die zweite Konsole 7 ist integral am zweiten Gehäuseteil 3 ausgeformt und wird demnach beim Herstellen des zweiten Gehäuseteils 3 einstückig bzw. materialeinheitlich daran ausgebildet.

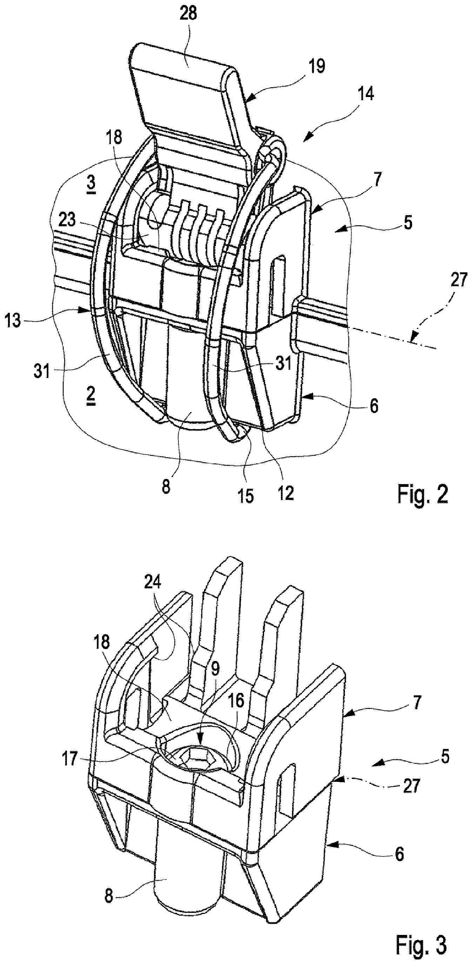

Die erste Konsole 6 weist einen Schraubdom 8 auf, in den eine in den Fig. 1 und 3 erkennbare Schraube 9 einschraubbar ist. Dabei greift ein Schaft 10 der Schraube 9 in eine Schrauböffnung 11 ein, die im Schraubdom 8 ausgebildet ist. Des Weiteren weist die erste Konsole 6 einen Klammereingriff 12 auf, an dem eine in den Fig. 1, 2 und 4 gezeigte Klammer 13 eines Klammerverschlusses 14 eingreifen kann. Die Klammer 13 besitzt hierzu ein Bügelende 15, das mit dem Klammereingriff 12 zum Festlegen der Klammer 13 an der ersten Konsole 6 zusammenwirkt. Erkennbar kann der Klammereingriff 12 hierzu in der ersten Konsole 6 an einer von der zweiten Konsole 7 abgewandten Seite eine Vertiefung definieren, in welche die Klammer 13 formschlüssig eingreifen kann.

Die zweite Konsole 7 weist ein Schraubenwiderlager 16 auf, an dem sich ein Kopf 17 der Schraube 9 axial abstützen kann. Ferner weist die zweite Konsole 7 ein Hebellager 18 auf, in dem sich ein Hebel 19 des Klammerverschlusses 14 um eine Hebelschwenkachse 20 schwenkbar abstützen kann. An diesem Hebel 19 ist die Klammer 13 um eine Klammerschwenkachse 21 schwenkbar gelagert. Zweckmäßig ist das Hebellager 18 hierzu nach außen konkav gekrümmt, derart, dass es die Hebelschwenkachse 20 definiert, um die der darin eingesetzte Hebel 19 im Hebellager 18 schwenkbar gelagert ist.

Das Schraubwiderlager 16 weist eine in den Figuren verdeckte Durchgangsöffnung 22 für den Schaft 10 der Schraube 9 auf. Diese Durchgangsöffnung 22 fluchtet axial zur Schrauböffnung 11 des Schraubdoms 8, wenn das erste Gehäuseteil 2 und das zweite Gehäuseteil 3 ordnungsgemäß aneinander angesetzt sind. Zum Verschrauben wird die Schraube 9 mit ihrem Schaft 10 durch die Durchgangsöffnung 22 hindurch gesteckt und in die Schrauböffnung 11 eingeschraubt.

Das Schraubenwiderlager 16 ist im Hebellager 18 angeordnet, und zwar versenkt, was sich insbesondere Fig. 3 entnehmen lässt. Die versenkte Anordnung des Schraubenwiderlagers 16 im Hebellager 18 kann gemäß Fig. 3 so ausgeführt sein, dass auch der Schraubenkopf 17 vollständig im Hebellager 18 versenkt angeordnet ist. In der Folge kann der Hebel 19 auch dann an der zweiten Konsole 7 angebracht werden, wenn die Schraube 9 eingesetzt ist. Ein in das Hebellager 18 eingesetztes Lagerende 23 des Hebels 19 deckt dann das Schraubenwiderlager 16 und gegebenenfalls den Schraubenkopf 17 ab. Der Klammereingriff 12 ist an einer dem Gehäuseinnenraum 4 zugewandten Seite des Schraubdoms 8 angeordnet, so dass das Bügelende 15 der Klammer 13 den Schraubdom 8 übergreift, wenn es mit dem Klammereingriff 12 in Eingriff steht. Insbesondere kann dabei der Schraubdom 8 an seiner dem Gehäuseinnenraum 4 zugewandten Seite einen Bestandteil des Klammereingriffs 12 bilden.

Wie sich insbesondere den Fig. 1 bis 3 entnehmen lässt, ist der Schraubdom 8 bezüglich der Hebelschwenkachse 20 mittig zum Klammereingriff 12 an der ersten Konsole 6 angeordnet. Ferner ist das Schraubenwiderlager 16 bezüglich der Hebelschwenkachse 20 mittig zum Hebellager 18 an der zweiten Konsole 7 angeordnet. Hierdurch ergibt sich eine kompakte Integration der zur Realisierung einer Schraubverbindung erforderlichen Elemente innerhalb der Elemente, die zur Realisierung einer Klammerverbindung erforderlich sind.

Die zweite Konsole 7 kann außerdem mit einer Rasteinrichtung 24 ausgestattet sein, die den Hebel 19 an der zweiten Konsole 7 sichert. Hierzu wirkt die Rasteinrichtung 24 mit dem Lagerende 23 zusammen. Die Rasteinrichtung 24 ist dabei so ausgestaltet und auf das Lagerende 23 abgestimmt, dass die Rastverbindung beim Einsetzen des Lagerendes 23 in das Hebellager 18 hergestellt wird. Mit anderen Worten, beim Einsetzen des Lagerendes 23 in das Hebellager 18 erfolgt die Verrastung. Anschließend ist der Hebel 19 und somit der gesamte Klammerverschluss 14 verliersicher an der zweiten Konsole 7 gehalten.

Gemäß den Fig. 1 bis 3 weist die erste Konsole 6 einen der zweiten Konsole 7 zugewandten flächigen ersten Anschlag 25 auf. Die zweite Konsole 7 weist einen der ersten Konsole 6 zugewandten flächigen zweiten Anschlag 26 auf. Die Anschläge 25, 26 sind so aufeinander abgestimmt, dass der erste Anschlag 25 am zweiten Anschlag 26 flächig abgestützt ist, wenn die beiden Gehäuseteile 2, 3 aneinander anliegen bzw. aneinander befestigt sind. Insbesondere kann dabei vorgesehen sein, dass die beiden Anschläge 25, 26 im zusammengebauten Zustand in einer in den Fig. 2 und 3 angedeuteten Trennebene 27 liegen, in der die beiden Gehäuseteile 2, 3 aneinander anliegen.

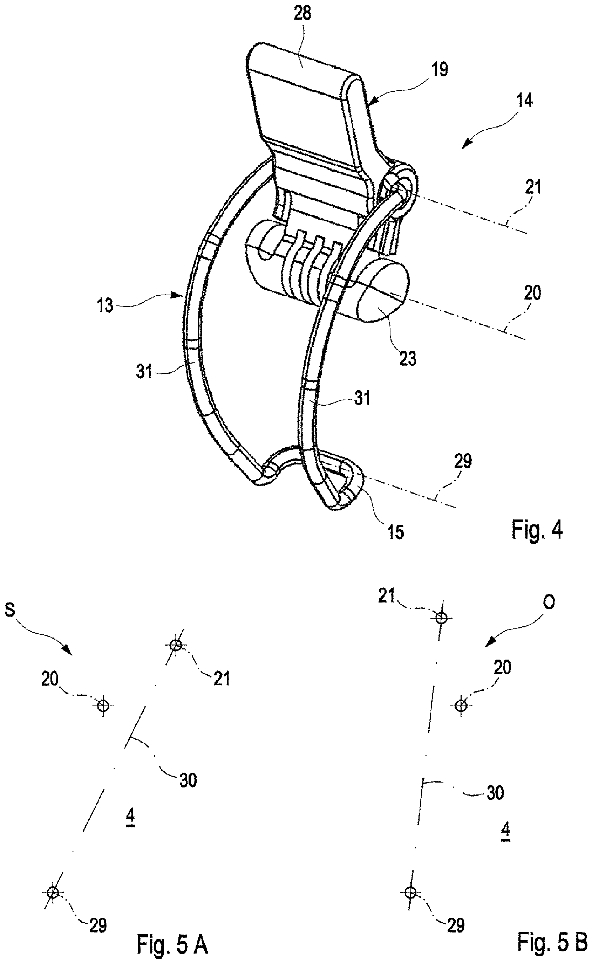

Wie sich den Fig. 1, 2 und 4 entnehmen lässt, besitzt der Hebel 19 ein manuell betätigbares Griffende 28 sowie das mit dem Hebellager 18 zusammenwirkende Lagerende 23. Die Klammer 13 ist nun zwischen dem Lagerende 23 und dem Griffende 28 am Hebel 19 um die Klammerschwenkachse 21 schwenkbar gelagert. Die Klammerschwenkachse 21 erstreckt sich dabei parallel zur Hebelschwenkachse 20. Der Klammerverschluss 14 ist durch Verschwenken des Hebels 19 um die Hebelschwenkachse 20 zwischen einer in Fig. 5A angedeuteten Schließstellung S und einer in Fig. 5B angedeuteten Offenstellung O verstellbar. In der Schließstellung S nimmt der Klammerverschluss 14 eine Übertotpunktlage ein. In den Fig. 5A und 5B sind die Hebelschwenkachse 20, die Klammerschwenkachse 21 und eine Bügelachse 29 vereinfacht wiedergegeben. Die Bügelachse 29 ist durch das mit dem Klammereingriff 12 zusammenwirkende Bügelende 15 der Klammer 13 definiert. Dieses Bügelende 15 erstreckt sich im Klammereingriff 12 in besagter Bügelachse 29. Die Klammerschwenkachse 21 und die Bügelachse 29 definieren eine Ebene 30, in der die Klammerschwenkachse 21 und die Bügelachse 29 verlaufen. Die Übertotpunktlage der Schließstellung S charakterisiert sich dadurch, dass sich diese Ebene 30, in der die Klammerschwenkachse 21 und die Bügelachse 29 liegen, zwischen der Hebelschwenkachse 20 und dem Gehäuseinnenraum 4 erstreckt. In der Offenstellung O gemäß Fig. 5B ist dagegen die Hebelschwenkachse 20 zwischen dem Gehäuseinnenraum 4 und besagter Ebene 30 angeordnet. Die Übertotpunktlage ist stabil, da zum Verstellen des Klammerverschlusses 14 aus der Übertotpunktlage, also aus der Schließstellung S heraus der Abstand zwischen Klammerschwenkachse 21 und Bügelachse 29 vergrößert werden muss. Dies kann nur entgegen der Federkraft der Klammer 13 erfolgen. Die Federkraft der Klammer 13 wird dabei durch einen gebogenen Federabschnitt 31 der Klammer 13 erzeugt.

Im Beispiel der Fig. 1 weist das erste Gehäuseteil 2 einen Öffnungsrand 32 auf, der eine Gehäuseöffnung 33 einfasst, durch die hindurch der Gehäuseinnenraum 4, zumindest der im ersten Gehäuseteil 2 liegende Bereich des Gehäuseinnenraums 4 zugänglich ist. Bei am ersten Gehäuseteil 2 angebrachtem zweitem Gehäuseteil 3 ist die Gehäuseöffnung 33 durch das zweite Gehäuseteil 3 verschlossen. Im Beispiel der Fig. 1 ist nun das erste Gehäuseteil 2 in seinem Öffnungsrand 33 mit einer geschlossen umlaufenden Nut 34 ausgestattet. Komplementär dazu besitzt das zweite Gehäuseteil 3 eine geschlossen umlaufende Feder 35, die integral am zweiten Gehäuseteil 3 ausgeformt ist. Bei am ersten Gehäuseteil 2 angesetztem zweitem Gehäuseteil 3 greift die Feder 35 formschlüssig in die Nut 34 ein. Die Feder 35 kann gemäß einer vorteilhaften Ausführungsform aus einem Dichtungsmaterial hergestellt sein. Sie kann dabei an den Kunststoff des zweiten Gehäuseteils 3 angeschäumt oder angespritzt sein. Alternativ dazu kann in die Nut 34 eine separate Dichtung eingesetzt sein. Ebenso ist denkbar, in die Nut 34 eine Dichtung einzuspritzen oder einzuschäumen.

Die beiden Gehäuseteile 2, 3 lassen sich mit Hilfe der jeweiligen Befestigungseinrichtung 5 somit entweder mit Hilfe der jeweiligen Schraube 9 oder mit Hilfe des jeweiligen Klammerverschlusses 14 lösbar aneinander befestigen. Während die Schraubverbindung nur wenige Male geöffnet werden kann, lässt sich die Klammerverbindung häufig öffnen und schließen. Beim hier gezeigten Beispiel ist die Klammerverbindung nachrüstbar, da der Klammerverschluss 14 ohne weiteres auch nachträglich an der zweiten Konsole 7 angebracht werden kann. Grundsätzlich ist auch eine Ausführungsform denkbar, bei der sowohl die Schraube 9 als auch der Klammerverschluss 14 zur Anwendung kommen. Beispielsweise können im Rahmen einer Serienfertigung sämtliche Gehäuse 1 mittels den Schrauben 9 verschlossen werden, um sie für die üblichen Anwendungsfälle vorzusehen, wobei nur eine kleine Anzahl der hergestellten Gehäuse 1 zusätzlich mit den Klammerverschlüssen 14 ausgestattet wird, um diese für spezielle Anwendungsfälle vorzusehen.

## Patentansprüche

1. Mehrteiliges Kunststoffgehäuse,
- mit einem ersten Gehäuseteil (2) aus Kunststoff und einem zweiten Gehäuseteil (3) aus Kunststoff, die mit wenigstens einer Befestigungseinrichtung (5) lösbar aneinander befestigbar sind,
- wobei die jeweilige Befestigungseinrichtung (5) eine am ersten Gehäuseteil (2) integral ausgeformte erste Konsole (6) und eine am zweiten Gehäuseteil (3) integral ausgeformte zweite Konsole (7) aufweist,
- wobei die erste Konsole (6) einen Schraubdom (8) zum Einschrauben einer Schraube (9) und einen Klammereingriff (12) aufweist, an dem eine Klammer (13) eines Klammerverschlusses (14) eingreifen kann,
- wobei die zweite Konsole (7) ein Schraubenwiderlager (16), an dem sich ein Kopf (17) der in den Schraubdom (8) eingeschraubten Schraube (9) axial abstützen kann, und ein Hebellager (18) aufweist, in dem sich ein Hebel (19) des Klammerverschlusses (14) abstützen kann, an dem die Klammer (13) schwenkbar gelagert ist.

2. Gehäuse nach Anspruch 1,
**dadurch gekennzeichnet,**
**dass** das Schraubenwiderlager (16) eine Durchgangsöffnung (22) für einen Schaft (10) der Schraube (9) aufweist, die zu einer Schrauböffnung (11) des Schraubdoms (8) fluchtet, wenn das erste Gehäuseteil (2) am zweiten Gehäuseteil (3) angebracht ist.

3. Gehäuse nach Anspruch 1 oder 2,
**dadurch gekennzeichnet,**
**dass** das Hebellager (18) nach außen konkav gekrümmt ist und eine Hebelschwenkachse (20) definiert, um die der Hebel (19) im Hebellager (18) schwenkbar gelagert ist.

4. Gehäuse nach einem der Ansprüche 1 bis 3,
**dadurch gekennzeichnet,**
**dass** das Schraubenwiderlager (16) im Hebellager (18), insbesondere versenkt, angeordnet ist.

5. Gehäuse nach einem der Ansprüche 1 bis 4,
**dadurch gekennzeichnet,**
**dass** ein in das Hebellager (18) eingesetztes Lagerende (23) des Hebels (19) das Schraubenwiderlager (16) abdeckt.

6. Gehäuse nach einem der Ansprüche 1 bis 5,
**dadurch gekennzeichnet,**
**dass** der Klammereingriff (12) in der ersten Konsole (6) an einer von der zweiten Konsole (7) abgewandten Seite eine Vertiefung definiert, in welche die Klammer (13) eingreifen kann.

7. Gehäuse nach einem der Ansprüche 1 bis 6,
**dadurch gekennzeichnet,**
**dass** ein in den Klammereingriff (12) eingreifendes Bügelende (15) der Klammer (13) den Schraubdom (8) übergreift.

8. Gehäuse nach einem der Ansprüche 1 bis 7,
**dadurch gekennzeichnet,**
- **dass** der Schraubdom (8) bezüglich einer Hebelschwenkachse (20), um die der Hebel (19) im Hebellager (18) schwenkbar gelagert ist, mittig zum Klammereingriff (12) angeordnet ist, und/oder
- **dass** das Schraubenwiderlager (16) bezüglich einer Hebelschwenkachse (20), um die der Hebel (19) im Hebellager (18) schwenkbar gelagert ist, mittig zum Hebellager (18) angeordnet ist.

9. Gehäuse nach einem der Ansprüche 1 bis 8,
**dadurch gekennzeichnet,**
**dass** die zweite Konsole (7) eine Rasteinrichtung (24) aufweist, die den Hebel (19) an der zweiten Konsole (7) sichert und die beim Einsetzen eines Lagerendes (23) des Hebels (19) in das Hebellager (18) einrastet.

10. Gehäuse nach einem der Ansprüche 1 bis 9,
**dadurch gekennzeichnet,**
- **dass** die erste Konsole (6) einen der zweiten Konsole (7) zugewandten ersten Anschlag (25) aufweist,
- **dass** die zweite Konsole (7) einen der ersten Konsole (6) zugewandten zweiten Anschlag (26) aufweist,
- **dass** der erste Anschlag (25) bei geschlossenem Gehäuse (1) am zweiten Anschlag (26) abgestützt ist.

11. Gehäuse nach Anspruch 10,
**dadurch gekennzeichnet,**
**dass** der erste Anschlag (25) und der zweite Anschlag (26) in einer Trennebene (27) liegen, in der das erste Gehäuseteil (2) und das zweite Gehäuseteil (3) aneinander anliegen.

12. Gehäuse nach einem der Ansprüche 1 bis 11,
**dadurch gekennzeichnet,**
- **dass** die jeweilige Befestigungseinrichtung (5) den Klammerverschluss (14) aufweist,
- **dass** der Hebel (19) ein manuell betätigbares Griffende (28) und ein im Hebellager (18) um eine Hebelschwenkachse (20) schwenkbar gelagertes Lagerende (23) aufweist,
- **dass** die Klammer (13) zwischen dem Lagerende (23) und dem Griffende (28) um eine Klammerschwenkachse (21) schwenkbar am Hebel (19) gelagert ist, die sich parallel zur Hebelschwenkachse (20) erstreckt.

13. Gehäuse nach einem der Ansprüche 1 bis 12,
**dadurch gekennzeichnet,**
- **dass** die jeweilige Befestigungseinrichtung (5) den Klammerverschluss (14) aufweist,
- **dass** der Klammerverschluss (14) durch Verschwenken des Hebels (19) um eine Hebelschwenkachse (20) im Hebellager (18) zwischen einer Schließstellung (S) und einer Offenstellung (O) verstellbar ist,
- **dass** der Klammerverschluss (14) in der Schließstellung (S) eine Übertotpunktlage einnimmt.

14. Gehäuse nach einem der Ansprüche 1 bis 13,
**dadurch gekennzeichnet,**
- **dass** das erste Gehäuseteil (2) einen Öffnungsrand (32) aufweist, der eine Gehäuseöffnung (33) einfasst, die bei am ersten Gehäuseteil (2) angebrachtem zweiten Gehäuseteil (3) durch das zweite Gehäuseteil (3) verschlossen ist,
- **dass** das erste Gehäuseteil (2) in diesem Öffnungsrand (32) eine Nut (34) aufweist, in die eine dazu komplementäre, am zweiten Gehäuseteil (3) vorgesehene Feder (35) eingreift, wenn das zweite Gehäuseteil (3) am ersten Gehäuseteil (2) angebracht ist.

15. Gehäuse nach einem der Ansprüche 1 bis 14,
**dadurch gekennzeichnet,**
**dass** bei am ersten Gehäuseteil (2) befestigtem zweiten Gehäuseteil (3) in der jeweiligen Befestigungseinrichtung (5), für den Fall, dass die jeweilige Befestigungseinrichtung (5) die Schraube (9) aufweist, die Schraube (9) in den Schraubdom (8) der ersten Konsole (6) eingeschraubt und mit ihrem Kopf (17) am Schraubenwiderlager (16) der zweiten Konsole (7) abgestützt ist, und/oder für den Fall, dass die Befestigungseinrichtung (5) den Klammerverschluss (14) aufweist, der Klammerverschluss (14) in seine Schließstellung (S) verstellt ist, in der die Klammer (13) in den Klammereingriff (12) der ersten Konsole (6) eingreift und der Hebel (19) am Hebellager (18) der zweiten Konsole (7) abgestützt ist.
